# EUROPEAN PATENT SPECIFICATION

(11) **EP 3 473 486 B1**
(45) Date of publication and mention of the grant of the patent: **08.12.2021**
(21) Application number: 17197798.6
(22) Date of filing: 23.10.2017
(51) Int. Cl.: B60L 58/00

(54) **METHOD FOR OPERATING A BATTERY SYSTEM AND BATTERY SYSTEM**
VERFAHREN ZUM BETREIBEN EINES BATTERIESYSTEMS UND BATTERIESYSTEM
PROCÉDÉ DE FONCTIONNEMENT D'UN SYSTÈME DE BATTERIE ET SYSTÈME DE BATTERIE

(43) Date of publication of application: 24.04.2019
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Gansemer, Michael, 74366 Kirchheim (DE); Woll, Christoph, 70839 Gerlingen (DE)
(74) Representative: Isarpatent

(56) References cited:
- DE-A1-102013 205 893
- JP-A- 2015 119 635
- US-A1- 2012 086 398
- US-A1- 2016 090 000
- US-A1- 2016 347 302

## Description

The invention relates to a method for operating a battery system of an electric drive of a vehicle as well as to a battery system for operating an electric drive of a vehicle.

### State of the art

In battery systems of electric drives of vehicles often so called mid-temperature batteries are used, which have an operating temperature range between 70 °C and 90 °C. Therefore, in case the vehicle stands still for some time, these batteries cool down below the operating temperature range and have to be preheated to be operated at operating temperature. Thus, it is commonly known to use so called starting batteries, which can be operated below the temperature of the mid-temperature battery for providing energy to a heating device to preheat a mid-temperature battery.

However, these starting batteries are limited in their capacity and therefore have to be recharged at some point in time. Since the mid-temperature battery also has to be charged, it is desirable to find a charging strategy for the starting battery and/or the mid-temperature battery. It is known from the document DE 199 03 082 A1 to use parameters of the environment as well as a past time period of load of the starting battery to find an algorithm of charging the starting battery. Furthermore, it is known from the document DE 10 2013 205 893 A1 to monitor a battery temperature and keep the charging state of the battery above a threshold value, which depends on the battery temperature monitoring. Although these data regarding the battery temperature can include route information, the charging strategy can be optimized, since it essentially depends on the threshold value of the battery charging state determined by the battery temperature prediction.

It is known from the document US 2016/347302 A1 that a vehicle includes an electrical storage device, an auxiliary load, a charger configured to charge the electrical storage device with power supplied from a power supply outside the vehicle, and an electronic control unit, which is configured to create an actuation schedule of the auxiliary load during charging of the electrical storage device, before initiation of the charging, configured to learn charging power of the electrical storage device for each actuation pattern of the auxiliary load during the charging, configured to estimate a required time period for the charging based on a learned value of the charging power, an execution time period of each of the actuation patterns, and a total charging power amount of the electrical storage device, and sets initiation time of the charging in accordance with the estimated required time period.

### Disclosure of invention

The invention is defined by the claims.

The present invention provides a method for operating a battery system of an electric drive of a vehicle according to claim 1.

Therefore, previously described disadvantages of the state of the art are at least partially avoided. Particularly, a charging strategy is presented, which provides an optimized operation of a battery system of an electric drive.

Further features and details of the invention result from the depending claims, the description and the drawings. Thereby the features and details, which are described corresponding to a method according to the invention naturally also apply corresponding to the battery system according to the invention and vice versa, so that according to the disclosure of the single aspects of the invention it can always be reciprocally related too.

Since at least one future charging interval for charging the starting battery is determined based on the operation data, the efficiency of the charging of the starting battery is increased. By using the operation data, the future charging interval can be directly connected to the driving application, which corresponds to the use of the traction battery of the vehicle.

Preferably, the determination of the at least one future charging interval can be performed prior to the start of the drive according to the driving application. The determination being based on the operation data can be understood in such a way that the future charging interval is determined by taking into account the operation data. The at least one future charging interval can comprise an actual time period, which is set for example in two hours from the initiating of the driving application. Furthermore, the future charging interval can depend on a special condition during the driving application. For example the future charging interval can be determined to start, when the vehicle has reached a certain point within a planned route or the like. The battery system preferably comprises the traction battery, preferably being a mid-temperature battery (e. g. at least a lithium ion battery with solid-state electrolyte, which has an operating temperature range between 70 °C and 90 °C), and the starting battery, in particular wherein the starting battery can be directly arranged within or next to the traction battery or somewhere else in the vehicle. Particularly, the starting battery is connected to a heating device for at least heating one battery module of the traction battery of the vehicle. In particular, the driving application can be understood as a trip, as series of trips or a part of a trip. Preferably, the driving application comprises the current or a planned trip the user wants to take by the vehicle. For initiating the driving application, the user can start a navigation system, which is connected to a control unit for determining the at least one future charging interval. Additionally or alternatively, the initiating of a driving application can comprise a starting of the vehicle and/or modeling or simulating a procedure of the driving application based on a history of behavior of the user in the past. The operation data can preferably be received by the control unit and can be sent by the navigation system, car sensors and/or battery sensors, which can provide characteristics of the initiated driving application. Therefore, the data of the need of charging the starting battery can be combined with operation data of the driving application to find an optimized charging interval not only depending on the need, but also depending on advantageous conditions related to the driving application. Therefore, the efficiency of use of energy of the starting battery and/or the traction battery for the driving application is improved.

It is furthermore conceivable that with a method according to the invention the future charging interval comprises the charging of the starting battery during and/or after the driving application. In particular, the future charging interval can comprise a timespan during or after the driving application. For example, if the user has planned a trip, where no charging infrastructure is available, a charging during the driving application can be realized by recuperation of energy and therefore it can be made sure that the vehicle can be started for another driving application after an idle period of the vehicle. For example, based on navigation data which can comprise or be compared to mapping data, in particular from the internet, it can be determined that a charging infrastructure is available at the end of the driving application so that the user can easily charge the vehicle while spending some time at the target area. It is further conceivable that the user is planning a round trip within the driving application and provides data for how long he plans to stay at a specific location. This time period can be used for the future charging interval in case of any charging infrastructure located in the target area.

The operation data comprises user data of a driving history and/or navigation data of the initiated driving application. The user data of a driving history can comprise data of the behavior of the user, for example related to the style of driving, the time of driving or the like. As described before, navigation data can provide further information about the planned trip of the user, for example the driving range, the topography of the planned route, information about charging infrastructure on the way, or the like. The driving history can be a driving history of the user and/or of the vehicle. In case the driving history is related to the vehicle it can comprise user data of several users, for example, in case the vehicle is a company car. By using the driving history and/or the navigation data the operation data can comprise more detailed information about the planned driving application and therefore the determination of the at least one future charging interval can be realized more effectively and with an increased accuracy.

Furthermore, it is conceivable that the operation data comprises environmental data of the vehicle and/or temporary vehicle parameters. Environmental data of the vehicle can for example comprise information about traffic on a route of the driving application, the outside temperature, the inside temperature, or the like. Furthermore, the temporary vehicle parameters can for example comprise a current speed of the vehicle, electrical loads, a maintenance state of the vehicle and/or a weight of a load of the vehicle. The environmental data and/or the temporary vehicle parameters can also be used for effectively increasing the accuracy of the determination of the at least one future charging interval for charging the starting battery. By providing more information, different influences can be taken into account to find the future charging interval application.

The determination of the future charging interval for charging the starting battery takes into account a main charging strategy for the at least one battery module of the traction battery. The main charging strategy for example can also rely on the operation data of the driving application and furthermore can comprise a determination of a future charging interval for charging the traction battery. Therefore it can be made sure that the charging of the starting battery does not negatively influence the main charging strategy of the traction battery

The main charging strategy has a higher priority than the charging of the starting battery in case of a recuperation of energy during the initiated driving application. Therefore, for example it can be provided that by taking into account the main charging strategy by a higher priority the charging of the starting battery is not performed at the expense of a driving range of the vehicle. The driving range can be essentially determined by a charging state of a traction battery. The recuperation of energy can, for example, be performed during breaking or during a downwards, in particular downhill, movement.

It is further conceivable that the determination of the future charging interval for charging the starting battery comprises at least one of the following steps:
- Calculating an estimated power consumption for at least a part of the driving application,
- Determining a current charging state of the starting battery and/or the at least one battery module of the traction battery.

Preferably the calculating of the estimated power consumption and the determining of the current charging state are both performed for the determination of the future charging interval so that the current charging state can be compared to the needed power and therefore it can be determined, when the future charging interval shall be provided for charging the starting battery. The estimated power consumption for example can be based on the operation data, as navigation data, user data of the driving history, or the like. The current charging state can for example be determined by measuring a current voltage of the starting battery and/or the at least one battery module of the traction battery.

It is furthermore conceivable that the operation data is at least partly provided by an external server and/or that the operation data is at least partly provided by a battery control unit and/or that the determination of the future charging interval for charging the starting battery is performed on a charging control unit. Therefore, the necessary calculating steps do not have to be performed on the battery control unit, directly, but can be outsourced to further computation facilities, particularly. In case the operation data is at least partly provided by an external server, for example, navigation data can be compared to mapping data, which can provide more information like information about charging infrastructures or the like. Furthermore, operation data can be provided by the battery control unit, which for example can monitor the charging state of the starting battery and/or the traction battery. Additionally or alternatively, the determination of the future charging interval can be performed on a charging control unit, which, for example, can be a central control unit of the vehicle. At such a charging control unit information can be bundled and matched for the determination of the future charging interval for charging the starting battery. Therefore, the accuracy of an effective future charging interval can be increased while keeping the computation infrastructure simple so that costs and production time can be saved.

Advantageously, the traction battery can comprise multiple battery modules, wherein the heating, in particular of the at least one battery module of the traction battery, is performed for specific battery modules, only. Preferably, the specific battery modules form at least one string of the battery modules. The specific battery modules for which the heating is performed can be chosen in an automatic selection process, which is preferably performed during the initiating of the driving application. Alternatively or additionally, the specific battery modules can be predefined by design. For example, it is possible that the heating device for heating the specific battery modules can be arranged adjacent to specific battery modules and out of range of further battery modules. The more specific battery modules are provided for which a heating can be performed, the faster the heating can be performed for heating the traction battery to a target temperature. Therefore, a stringwise arrangement of the heating device can be effective in regards of installation space and heating as well.

Further, the present invention provides a battery system for operating an electric drive of a vehicle according to claim 7. In particular, the charging control unit can be a central control unit of the vehicle. A battery system according to the invention provides the same advantages, which are described before in relation to the method according to the invention.

Further advantages, features and details of the invention result from the following description in which, with reference to the drawings, embodiments of the invention are described in detail. Thereby the features described in the claims and in the description can be each single or in every combination be essential to the invention. It is shown:
- Figure 1: method steps of a method according to the invention in a first embodiment in a schematic drawing,
- Figure 2: data exchange related to operation data in a method according to the invention in a further embodiment,
- Figure 3: a battery system according to the invention in a schematic drawing according to a further embodiment for heating only parts of strings of battery modules of a traction battery of the battery system,
- Figure 4: a battery system according to the invention in a schematic drawing according to a further embodiment for heating a traction battery of the battery system at least partly stringwise,
- Figure 5: a vehicle comprising a battery system according to the invention in a further embodiment.

In the different figures same features always correspond to the same reference signs and therefore generally the features are described once, only.

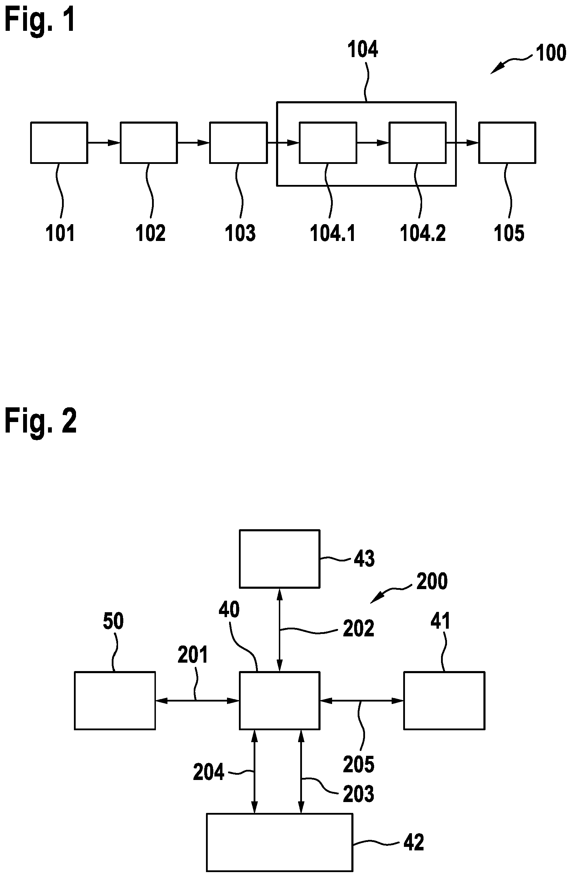

Figure 1 shows method steps of a method 100 according to the invention in a further embodiment. In a first step an initiating 101 of a driving application of the vehicle 1 is performed. The initiating can for example be realized by entering navigation data 202 into a navigation system 43 by a user, by starting a vehicle 1 or further conditions. In case the driving application is initiated by starting a trip on a navigation system 43 by a user the navigation data 202 can be provided as operation data 200. Furthermore, a heating 102 is performed for at least one battery module 11 of a traction battery 10 of the vehicle 1 wherein energy provided by a starting battery 20 is used. Therefore, the traction battery 10, which preferably can be a mid-temperature battery is brought to an operation temperature by a heating device 30, which is connected to the starting battery 20. After heating 102 the at least one battery module 11 of the traction battery 10 the vehicle 1 can be ready to drive according to the previously initiated driving application. Furthermore, the method 100 comprises the receiving 103 of operation data 200, which is related to the initiated driving application. This operation data 200 can for example include navigation data 202 as well as further data as shown in figure 2. Based on the operation data a determination 104 of at least one future charging interval for charging 105 the starting battery 20 can be performed. The determination 104 can for example comprise the steps of calculating 104.1 an estimated power consumption of at least a part of the driving application and/or the determination 104.2 of a current charging state of the starting battery 20 and/or of the at least one battery module 11 of the traction battery 10. The calculating 104.1 of the estimated power consumption as well as the determination 104.2 of the current charging state are preferably both based on the operation data 200. After the determination 104 of the at least one future charging interval the charging 105 of the starting battery 20 can be performed, preferably during or after the driving application, at the future charging interval. Therefore, the charging 105 of the starting battery 20 can be performed in an energy efficient way, which can also support the long product lifetime of the starting battery 20 and/or the traction battery 10.

Figure 2 shows a charging control unit 40 receiving operation data 200 in a schematic overview in a further embodiment. The operation data 200 comprises user data 201 of a driving history, which is provided by a server 50. The server 50 can store different user profiles collecting user data 201 of the driving history of the vehicle 1 or the user. For a determination 104 of at least one future charging interval for charging 105 for starting battery 20. Furthermore, the charging control unit 40 receives navigation data 202 of the operation data 200 which is provided by a navigation system 43. For example, the user can initiate 101 a driving application of the vehicle 1 by entering his planned trip into the navigation system 43, wherein the navigation system 43 provides the navigation data 202 for the charging control unit 40. Furthermore, the operation data 200 comprises battery data 205 of a battery control unit 41. The battery data 205 can, for example, comprise the operation data 200 of the traction battery 10 and/or the starting battery 20. Such operation data can comprise an estimated power consumption for at least a part of the driving application and/or a current charging state of the starting battery 20 and/or the traction battery 10. The battery data 205 can be measured inside the traction battery 10 and/or the starting battery 20 and be provided by the battery control unit 41. Furthermore, the operation data 200 can comprise environmental data 203 of the vehicle 1 and/or temporary vehicle parameters 204 which can be provided by a sensor 42, which can be part of the vehicle 1. The sensor 42 can, for example, be a temperature sensor for determining the outside temperature of the vehicle 1 and/or the inside temperature of the vehicle 1. Furthermore, it is conceivable that the sensor 42 can measure the weight of the load of the vehicle, which can be included in the temporary vehicle parameters 204. By the operation data 200 the charging control unit 40 can determine at least one future charging interval for charging the starting battery 20 based on the operation data 200 of the driving application of the vehicle 1, in case the driving application is initiated. Therefore, the determination of the at least one future charging interval for charging the starting battery 20 can have a high accuracy for calculating an optimized charging interval, preferably during or after the driving application.

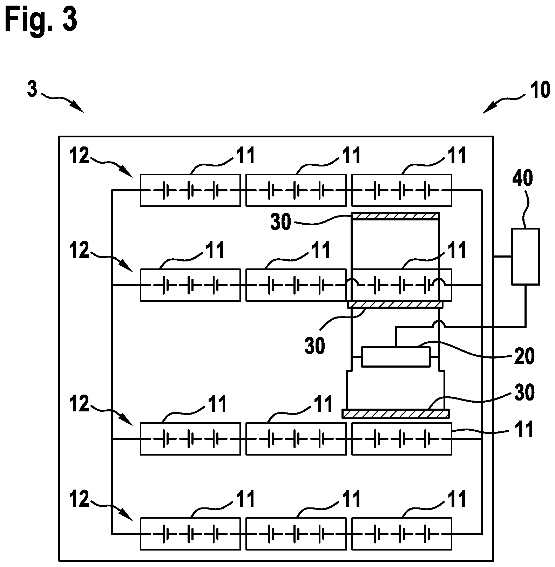

Figure 3 shows a battery system 3 for an electric drive 2 of a vehicle 1 in a schematic drawing of a first embodiment. The battery system 3 comprises a traction battery 10 and a starting battery 20, which is integrated into the traction battery 10. The traction battery 10 comprises multiple battery modules 11, which are arranged in strings 12, wherein the strings 12 are connected in parallel to each other. Each battery module 11 preferably comprises multiple battery cells, which are connected in series within each battery module 11. Within a string 12 furthermore the battery modules 11 are connected in series too. In case the traction battery 10 is cooled down, for example because the vehicle 1 was not used during an idle period, a starting battery 20 is provided for heating at least one battery module 11. In particular, it can be provided that only specific battery modules 11 are heated, as the starting battery 20 is connected to a heating device 30, particularly which can provide a heating of three of the battery modules 11, only. For starting the vehicle 1, therefore only these specific battery modules 11 are preheated to provide enough energy for the vehicle start. By operating the specific battery modules the traction battery 10 will heat up and therefore further battery modules 11 can be operated to provide energy for a longer distance. Furthermore, the traction battery 10 and the starting battery 20 are connected to a charging control unit 40, which is preferably designed to perform a method 100 as described in the embodiments described before.

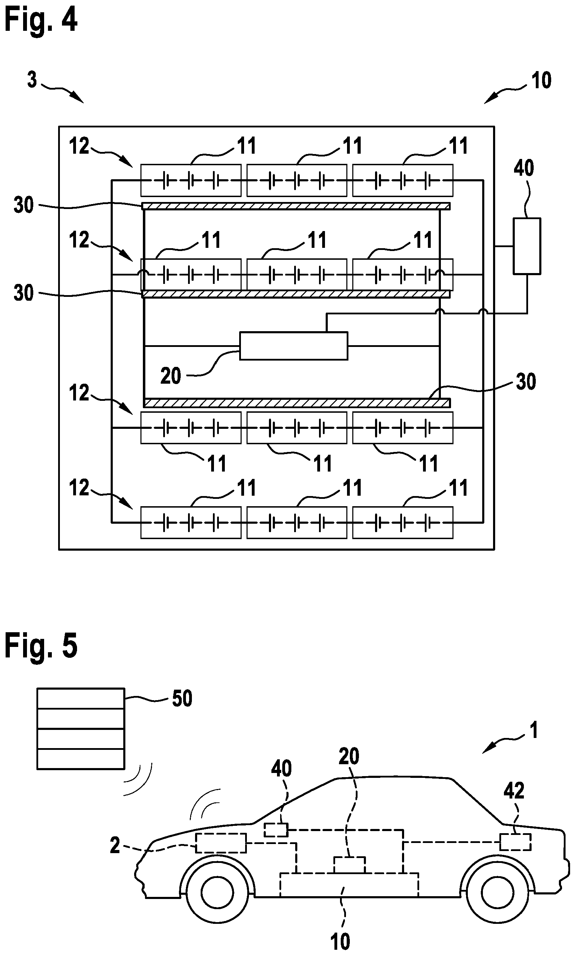

Figure 4 shows a battery system 3 which essentially corresponds to the battery system of the embodiment described in relation to figure 3. However, instead of heating only parts of some of the strings 12, the heating device 30 of the embodiment of figure 4 is designed for heating the traction battery 10 stringwise. Therefore, the heating device 30 extends along all of the battery modules 11 of each string 12 to be heated. This provides the advantage that the traction battery 10 can be heated up in a very short time, since multiple battery modules 11 of each string 12 can be heated up at the same time and therefore can provide energy, simultaneously, or nearly simultaneously.

Figure 5 shows a vehicle 1 having an electric drive 2 and a traction battery 10, which is able to provide energy for the electric drive 2. Furthermore, the vehicle 1 comprises a charging control unit 40 which can be brought into communication connection with an external server 50 to receive operation data 200 related to a driving application of the vehicle 1. Furthermore, the charging control unit 40 is connected to a sensor 42 to receive further operation data 200 comprising environmental data 203 of the vehicle 1 or temporary data of the vehicle 1. In particular, the charging control unit 40 is connected to the traction battery 10 and/or a starting battery 20.

## Claims

1. Method (100) for operating a battery system (3) of an electric drive (2) of a vehicle (1) comprising the following steps:
- initiating (101) a driving application of the vehicle (1), wherein the driving application is a trip, series of trips or a part of a trip,
- heating (102) at least one battery module (11) of a traction battery (10) of the vehicle (1) using energy provided by a starting battery (20),
- receiving (103) operation data (200) related to the initiated driving application, wherein the operation data (200) comprises user data (201) of a driving history and/or navigation data (202) of the initiated driving application
- determining (104) of at least one future charging interval for a charging (105) of the starting battery (20) from a recuperation of energy during the initiated driving application and/or the traction battery (10), wherein the determining (104) of the at least one future charging interval is based on the operation data (200),
wherein the determining (104) of the future charging interval for charging (104) the starting battery (20) takes into account a main charging strategy, wherein the main charging strategy is a charging strategy for the at least one battery module (11) of the traction battery (10) and has a higher priority than the charging (105) of the starting battery (20) in case of a recuperation of energy during the initiated driving application.

2. Method (100) according to claim 1,
**characterized in that**
the future charging interval comprises the charging (105) of the starting battery (20) during and/or after the driving application.

3. Method (100) according to claim 1 or 2,
**characterized in that**
the operation data (200) comprises environmental data (203) of the vehicle (1) and/or temporary vehicle parameters (204).

4. Method (100) according to one of the preceding claims,
**characterized in that**
the determining (104) of the future charging interval for charging (105) the starting battery (20) comprises at least one of the following steps:
- calculating (104.1) an estimated power consumption for at least a part of the driving application,
- determining (104.2) a current charging state of the starting battery (20) and/or the at least one battery module (11) of the traction battery (10).

5. Method (100) according to one of the preceding claims,
**characterized in that**
the operation data (200) is at least partly provided by an external server (50) and/or that the operation data (200) is at least partly provided by a battery control unit (41) and/or that the determining (104) of the future charging interval for the charging (105) of the starting battery (20) is performed on a charging control unit (40).

6. Method (100) according to one of the preceding claims,
**characterized in that**
the traction battery (10) comprises multiple battery modules (11), wherein the heating (102) is performed for specific battery modules, only.

7. Battery system (3) for operating an electric drive (2) of a vehicle (1) comprising:
a traction battery (10) having at least one battery module (11) for providing energy to the electric drive (2), and
a starting battery (20) which is connected to a heating device (30) for heating the at least one battery module (11) of the traction battery (10),
**characterized in that**
a charging control unit (40) is provided for determining (104) at least one future charging interval for a charging (105) of the starting battery (20) based on operation data (200) of a driving application of the vehicle (1), in case the driving application is initiated, wherein the driving application is a trip, series of trips or a part of a trip, and
the charging control unit (40) is designed to perform a method (100) according to one of the claims 1 to 6.

## Patentansprüche

1. Verfahren (100) zum Betreiben eines Batteriesystems (3) eines elektrischen Antriebs (2) eines Fahrzeugs (1), umfassend die folgenden Schritte:
- Initiieren (101) einer Fahranwendung des Fahrzeugs (1), wobei die Fahranwendung eine Fahrt, eine Reihe von Fahrten oder ein Teil einer Fahrt ist,
- Erwärmen (102) zumindest eines Batteriemoduls (11) einer Antriebsbatterie (10) des Fahrzeugs (1) unter Verwendung von Energie, die durch eine Anlassbatterie (20) bereitgestellt wird,
- Empfangen (103) von Betriebsdaten (200) im Zusammenhang mit der initiierten Fahranwendung, wobei die Betriebsdaten (200) Benutzerdaten (201) eines Fahrverlaufs und/oder Navigationsdaten (202) der initiierten Fahranwendung umfassen
- Bestimmen (104) zumindest eines künftigen Ladeintervalls für ein Laden (105) der Anlassbatterie (20) aus einer Rückgewinnung von Energie während der initiierten Fahranwendung und/oder der Antriebsbatterie (10), wobei das Bestimmen (104) des zumindest einen künftigen Ladeintervalls auf den Betriebsdaten (200) basiert, wobei das Bestimmen (104) des künftigen Ladeintervalls zum Laden (104) der Anlassbatterie (20) eine Hauptladestrategie berücksichtigt, wobei die Hauptladestrategie eine Ladestrategie für das zumindest eine Batteriemodul (11) der Antriebsbatterie (10) ist und eine höhere Priorität als das Laden (105) der Anlassbatterie (20) im Falle einer Rückgewinnung von Energie während der initiierten Fahranwendung hat.

2. Verfahren (100) nach Anspruch 1,
**dadurch gekennzeichnet, dass** das künftige Ladeintervall das Laden (105) der Anlassbatterie (20) während und/oder nach der Fahranwendung umfasst.

3. Verfahren (100) nach Anspruch 1 oder 2, **dadurch gekennzeichnet, dass** die Betriebsdaten (200) Umgebungsdaten (203) des Fahrzeugs (1) und/oder temporäre Fahrzeugparameter (204) umfassen.

4. Verfahren (100) nach einem der vorhergehenden Ansprüche,
**dadurch gekennzeichnet, dass** das Bestimmen (104) des künftigen Ladeintervalls zum Laden (105) der Anlassbatterie (20) zumindest einen der folgenden Schritte umfasst:
- Berechnen (104.1) eines geschätzten Leistungsverbrauchs für zumindest einen Teil der Fahranwendung,
- Bestimmen (104.2) eines aktuellen Ladezustands der Anlassbatterie (20) und/oder des zumindest einen Batteriemoduls (11) der Antriebsbatterie (10).

5. Verfahren (100) nach einem der vorhergehenden Ansprüche,
**dadurch gekennzeichnet, dass** die Betriebsdaten (200) zumindest teilweise durch einen externen Server (50) bereitgestellt werden und/oder dass die Betriebsdaten (200) zumindest teilweise durch eine Batteriesteuereinheit (41) bereitgestellt werden und/oder dass das Bestimmen (104) des künftigen Ladeintervalls für das Laden (105) der Anlassbatterie (20) auf einer Ladesteuereinheit (40) durchgeführt wird.

6. Verfahren (100) nach einem der vorhergehenden Ansprüche,
**dadurch gekennzeichnet, dass** die Antriebsbatterie (10) mehrere Batteriemodule (11) umfasst, wobei das Erwärmen (102) nur für bestimmte Batteriemodule durchgeführt wird.

7. Batteriesystem (3) zum Betreiben eines elektrischen Antriebs (2) eines Fahrzeugs (1), das Folgendes umfasst:
eine Antriebsbatterie (10) mit zumindest einem Batteriemodul (11) zum Bereitstellen von Energie für den elektrischen Antrieb (2), und
eine Anlassbatterie (20), die mit einer Erwärmungsvorrichtung (30) verbunden ist, zum Erwärmen des zumindest einen Batteriemoduls (11) der Antriebsbatterie (10),
**dadurch gekennzeichnet, dass** eine Ladesteuereinheit (40) bereitgestellt ist zum Bestimmen (104) zumindest eines künftigen Ladeintervalls für ein Laden (105) der Anlassbatterie (20) basierend auf Betriebsdaten (200) einer Fahranwendung des Fahrzeugs (1), im Falle, dass die Fahranwendung initiiert wird, wobei die Fahranwendung eine Fahrt, eine Reihe von Fahrten oder ein Teil einer Fahrt ist, und
wobei die Ladesteuereinheit (40) konzipiert ist zum Durchführen eines Verfahrens (100) nach einem der Ansprüche 1 bis 6.

## Revendications

1. Procédé (100) pour faire fonctionner un système de batterie (3) d'une commande électrique (2) d'un véhicule (1) comprenant les étapes suivantes :
- déclencher (101) une application de conduite du véhicule (1), l'application de conduite étant un trajet, une série de trajets ou une partie d'un trajet,
- chauffer (102) au moins un module de batterie (11) d'une batterie de traction (10) du véhicule (1) à l'aide d'énergie fournie par une batterie de démarrage (20),
- recevoir (103) des données de fonctionnement (200) relatives à l'application de conduite déclenchée, les données de fonctionnement (200) comprenant des données d'utilisateur (201) d'un historique de conduite et/ou des données de navigation (202) de l'application de conduite déclenchée
- déterminer (104) au moins un intervalle de charge futur pour une charge (105) de la batterie de démarrage (20) à partir d'une récupération d'énergie pendant l'application de conduite déclenchée et/ou de la batterie de traction (10), la détermination (104) de l'au moins un intervalle de charge futur étant basée sur les données de fonctionnement (200),
la détermination (104) de l'intervalle de charge futur pour la charge (104) de la batterie de démarrage (20) prenant en compte une stratégie de charge principale, la stratégie de charge principale étant une stratégie de charge pour l'au moins un module de batterie (11) de la batterie de traction (10) et ayant une priorité plus élevée que la charge (105) de la batterie de démarrage (20) en cas de récupération d'énergie pendant l'application de conduite déclenchée.

2. Procédé (100) selon la revendication 1,
**caractérisé en ce que**
l'intervalle de charge futur comprend la charge (105) de la batterie de démarrage (20) pendant et/ou après l'application de conduite.

3. Procédé (100) selon la revendication 1 ou la revendication 2,
**caractérisé en ce que**
les données de fonctionnement (200) comprennent des données environnementales (203) du véhicule (1) et/ou des paramètres de véhicule temporaires (204).

4. Procédé (100) selon une des revendications précédentes, **caractérisé en ce que**
la détermination (104) de l'intervalle de charge futur pour la charge (105) de la batterie de démarrage (20) comprend au moins une des étapes suivantes :
- calculer (104.1) une consommation d'électricité estimée pour au moins une partie de l'application de conduite,
- déterminer (104.2) un état de charge actuel de la batterie de démarrage (20) et/ou de l'au moins un module de batterie (11) de la batterie de traction (10).

5. Procédé (100) selon une des revendications précédentes, **caractérisé en ce que**
les données de fonctionnement (200) sont fournies au moins en partie par un serveur externe (50) et/ou **en ce que** les données de fonctionnement (200) sont fournies au moins en partie par une unité de contrôle de batterie (41) et/ou **en ce que** la détermination (104) de l'intervalle de charge futur pour la charge (105) de la batterie de démarrage (20) est réalisée sur une unité de contrôle de charge (40).

6. Procédé (100) selon une des revendications précédentes, **caractérisé en ce que**
la batterie de traction (10) comprend de multiples modules de batterie (11), dans lequel
le chauffage (102) est réalisé pour des modules de batterie spécifiques, uniquement.

7. Système de batterie (3) pour faire fonctionner une commande électrique (2) d'un véhicule (1) comprenant :
une batterie de traction (10) ayant au moins un module de batterie (11) pour fournir de l'énergie à la commande électrique (2), et
une batterie de démarrage (20) qui est connectée à un dispositif de chauffage (30) pour chauffer l'au moins un module de batterie (11) de la batterie de traction (10),
**caractérisé en ce que**
une unité de contrôle de charge (40) est fournie pour déterminer (104) au moins un intervalle de charge futur pour une charge (105) de la batterie de démarrage (20) sur la base de données de fonctionnement (200) d'une application de conduite du véhicule (1), dans le cas où l'application de conduite est déclenchée, l'application de conduite étant un trajet, une série de trajets ou une partie d'un trajet, et
l'unité de contrôle de charge (40) est conçue pour réaliser un procédé (100) selon l'une des revendications 1 à 6.
